(19) Europäisches Patentamt
European Patent Office
Office européen des brevets

(11) **EP 4 607 240 B1**

(12) **EUROPÄISCHE PATENTSCHRIFT**

(45) Veröffentlichungstag und Bekanntmachung des Hinweises auf die Patenterteilung:
**01.04.2026 Patentblatt 2026/14**

(21) Anmeldenummer: **24159128.8**

(22) Anmeldetag: **22.02.2024**

(51) Internationale Patentklassifikation (IPC):
*G01S 13/75* (2006.01)  *G01S 13/933* (2020.01)
*G01S 13/74* (2006.01)  *F03D 80/10* (2016.01)
*G08G 5/80* (2025.01)

(52) Gemeinsame Patentklassifikation (CPC):
**G01S 13/933; G01S 13/74; G08G 5/80; F03D 80/10**

(54) **VERFAHREN UND SYSTEM ZUR KENNZEICHNUNG EINES LUFTFAHRTHINDERNISSES**

METHOD AND SYSTEM FOR IDENTIFYING AN AVIATION OBSTACLE

PROCÉDÉ ET SYSTÈME DE CARACTÉRISATION D'UN OBSTACLE AÉRONAUTIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**27.08.2025 Patentblatt 2025/35**

(73) Patentinhaber: **Dark Sky GmbH**
**17291 Prenzlau (DE)**

(72) Erfinder:
• **HERRHOLZ, Thomas**
**17099 Galenbeck (DE)**
• **KNOX, Arne**
**25845 Nordstrand (DE)**
• **DRENTE, Patrick**
**17358 Hammer an der Uecker (DE)**

(74) Vertreter: **Steffens, Adrian**
**Boehmert & Boehmert**
**Anwaltspartnerschaft mbB**
**Pettenkoferstraße 22**
**80336 München (DE)**

(56) Entgegenhaltungen:
**EP-B1- 3 693 946  WO-A1-2006/092137**
**DE-U1- 202005 019 193**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und ein System zur Kennzeichnung eines Luftfahrthindernisses sowie eine Datenverarbeitungseinrichtung.

Hintergrund

Eine Hindernisbefeuerung dient der Kennzeichnung von Luftfahrthindernissen wie Windenergieanlagen, insbesondere auch in der Nacht oder bei schlechter Sicht, sodass Luftfahrzeuge wie Flugzeuge oder Hubschrauber Kollisionen vermeiden können. Hierbei kann vorgesehen sein, die Hindernisbefeuerung nur dann zu aktivieren, wenn sich ein Luftfahrzeug der Windenergieanlage kritisch nähert. So können Lichtemissionen, die Anwohner in der Nähe der Windenergieanlage beeinträchtigen können, gemindert werden. Zum anderen können auf diese Weise gesetzliche Vorgaben der Luftverkehrssicherheit eingehalten werden, da nur die für den jeweiligen Luftfahrzeugführer relevanten Hinderniskennzeichnungen aktiv sind.

Eine Anordnung zum Steuern einer bedarfsgerechten Hindernisbefeuerung einer Windenergieanlage ist aus dem Dokument EP 3 926 166 A1 bekannt.

In dem Dokument WO 2006 / 092 137 wird ein Luftfahrthindernis mit Warnlichtern zur Warnung von Flugzeugen zum Verhindern von Kollisionen offenbart. Das Luftfahrthindernis umfasst eine Antenne zum Empfangen eines Funksignals und Mittel zum Aktivieren der Warnlichter bei Empfang eines Funksignals von einem Flugzeug.

In dem Dokument EP 3 693 946 B1 werden ein Verfahren und eine Anlage zur Steuerung von Beleuchtungseinrichtungen für Flughindernisse sowie ein zugehöriges Computerprogramm offenbart. Es wird ein Antennenmast eines zellulären Mobilfunknetzes beschrieben, der eine oder mehrere Mobilfunkantennen umfasst, um eine Luftschnittstelle des Mobilfunknetzes zu den Mobiltelefonen in der Umgebung zu bilden. Darüber hinaus wird ein Verfahren zur Bereitstellung von Flugdaten von Luftfahrzeugen, ein Computerprogramm zur Durchführung dieses Verfahrens und eine Anlage zur Bereitstellung von Flugdaten von Luftfahrzeugen behandelt.

In dem Dokument DE 20 2005 019193 U1 wird ein System zur Steuerung von Hindernisfeuern durch Transpondersignale offenbart. Ein Signal vom Mode-S-Transponder schaltet die Hindernisbeleuchtung.

Zusammenfassung

Aufgabe der Erfindung ist es, Technologien bereitzustellen, mit denen eine Kennzeichnung eines Luftfahrthindernisses in effizienter und energiesparender Weise ermöglicht wird.

Zur Lösung sind ein computerimplementiertes Verfahren und ein System zur Kennzeichnung eines Luftfahrthindernisses nach den Ansprüchen 1 und 15 geschaffen. Des Weiteren wird eine Datenverarbeitungseinrichtung bereitgestellt. Ausgestaltungen sind Gegenstand abhängiger Unteransprüche.

Nach einem Aspekt ist ein computerimplementiertes Verfahren zur Kennzeichnung eines Luftfahrthindernisses geschaffen, welches folgende Schritte aufweist: Bereitstellen von ersten Transpondersignalen, welche jeweils einem Luftfahrzeug einer Mehrzahl erster Luftfahrzeuge zugeordnet sind und jeweils eine aktuelle Positionsinformation des Luftfahrzeugs aufweisen, und Bereitstellen von jeweiligen ersten Signalstärkewerten für die ersten Transpondersignale; Bestimmen, aus den ersten Transpondersignalen, von jeweiligen Entfernungen der ersten Luftfahrzeuge zu einem Luftfahrthindernis; Bestimmen von normierten Signalstärkewerten mittels jeweiligen Normierens der ersten Signalstärkewerte; Bestimmen eines Referenzwerts aus einem niedrigsten oder mehreren niedrigsten der normierten Signalstärkewerte; Bereitstellen eines zweiten Transpondersignals, welches einem zweiten Luftfahrzeug zugeordnet ist, und eines zweiten Signalstärkewerts für das zweite Transpondersignal; Bestimmen des zweiten Luftfahrzeugs als relevantes Luftfahrzeug oder Bestimmen des zweiten Luftfahrzeugs als irrelevantes Luftfahrzeug unter Verwendung (oder mittels) eines Vergleichs des zweiten Signalstärkewerts mit dem Referenzwert; und Erzeugen eines Ausgabesignals für eine Kennzeichnungsvorrichtung zur Kennzeichnung des Luftfahrthindernisses in Abhängigkeit vom Vorliegen oder in Abhängigkeit vom Nichtvorliegen mindestens eines relevanten Luftfahrzeugs.

Es kann ein Verfahren zur Kennzeichnung eines Luftfahrthindernisses vorgesehen sein, welches in einem System mit einer Empfangsvorrichtung, einer Datenverarbeitungseinrichtung und einer Kennzeichnungsvorrichtung ausgeführt wird und folgende Schritte aufweist: Empfangen von ersten Transpondersignalen und einem zweiten Transpondersignal in der Empfangsvorrichtung; Übermitteln der ersten Transpondersignale und des zweiten Transpondersignals an die Datenverarbeitungseinrichtung; Durchführen des computerimplementierten Verfahrens in der Datenverarbeitungseinrichtung; Übermitteln eines Ausgabesignals von der Datenverarbeitungseinrichtung an die Kennzeichnungsvorrichtung; Schalten einer Kennzeichnung des Luftfahrthindernisses mittels der Kennzeichnungsvorrichtung in Abhängigkeit vom Ausgabesignal.

Nach einem weiteren Aspekt ist eine Datenverarbeitungseinrichtung geschaffen, welche mindestens einen Prozessor aufweist und eingerichtet ist, das computerimplementierte Verfahren auszuführen.

Nach einem weiteren Aspekt ist ein System zur Kennzeichnung eines Luftfahrthindernisses geschaffen, welches eine Empfangseinrichtung, eine Datenverarbeitungseinrichtung und eine Kennzeichnungsvorrichtung aufweist. Die Empfangsvorrichtung ist eingerichtet, erste Transpondersignalen und ein zweites Transpondersignal zu empfangen und an die Datenverarbeitungseinrichtung zu übermitteln. Die Datenverarbeitungseinrichtung ist eingerichtet, das computerimplementierte Verfahren auszuführen und ein Ausgabesignal an die Kennzeichnungsvorrichtung zu übermitteln, und die Kennzeichnungsvorrichtung ist eingerichtet, eine Kennzeichnung des Luftfahrthindernisses in Abhängigkeit vom Ausgabesignal zu schalten.

Mittels des Verfahrens, insbesondere des verfahrensgemäßen Bestimmens des Referenzwerts anhand von Transpondersignalen zur Klassifizierung von Luftfahrzeugen als relevant oder irrelevant, können Kalibrierungen, Verarbeitungs- und Materialabweichungen sowie Wetterbedingungen vernachlässigt werden. Auf diese Weise können eine einfache Prüfung und Verwendung von Kennzeichnungsvorrichtungen am Installationsort ermöglicht werden, sodass insbesondere Befliegungen und Befahrungen vermieden werden können.

Es wird des Weiteren ermöglicht, weitere erfasste Luftfahrzeuge als irrelevant zu bestimmen, sodass die Kennzeichnungsvorrichtung, insbesondere ein Hindernisfeuer, über einen vergrößerten Zeitraum deaktiviert sein kann. Beispielsweise werden Transpondersignale mit Datenblöcken der Formatnummer DF11 im Allgemeinen aufgrund ihrer Länge weniger verrauscht und können auch aus größeren Entfernungen noch deutlich empfangen werden. Solche DF11-Transpondersignale enthalten jedoch nur eine eindeutige Transpondernummer und keine Positionsinformation und/oder Höheninformation des Luftfahrzeugs. Mittels des Verfahrens können auch solche Luftfahrzeuge als irrelevant bestimmt werden.

Die Kennzeichnungsvorrichtung kann ein Hindernisfeuer oder eine Mehrzahl von Hindernisfeuern aufweisen. Das Hindernisfeuer oder die Mehrzahl von Hindernisfeuern können benachbart zum, insbesondere am Luftfahrthindernis angeordnet sein. Das Luftfahrthindernis kann ein räumliches Objekt (beispielsweise eine Windkraftanlage) oder eine Mehrzahl von räumlichen Objekten (insbesondere eine Mehrzahl von Windkraftanlagen) aufweisen. Die Kennzeichnungsvorrichtung kann zur Befeuerung, insbesondere zur Nachtbefeuerung (Nachtkennzeichnung) und/oder Tagesbefeuerung und/oder Flugsichtbefeuerung, eingerichtet sein. Die Kennzeichnungsvorrichtung (insbesondere das oder die Hindernisfeuer) kann (können) zum Ausstrahlen von elektromagnetischen Signalen, insbesondere Lichtsignalen und/oder Funksignalen eingerichtet sein. Beispielsweise kann die Kennzeichnungsvorrichtung mindestens eine LED und/oder mindestens eine Gasentladungslampe und/oder mindestens ein Funkfeuer aufweisen.

Die Empfangsvorrichtung kann eingerichtet sein, Funksignale, insbesondere Transpondersignale, zu empfangen. Die (ersten und/oder zweiten) Transpondersignale können somit (jeweils) Funksignale sein. Die (ersten und/oder zweiten) Transpondersignale können jeweils eines von einem Mode-A-Signal, einem Mode-C-Signal oder einem Mode-S-Signal sein. Entsprechend kann eine Transponder-Betriebsart (des Transponders des entsprechenden Luftfahrzeugs) Mode A, Mode C oder Mode S sein.

Die Empfangsvorrichtung kann im Zentrum eines Wirkraums des Luftfahrthindernisses und/oder am Luftfahrhindernis angeordnet sein. Auf diese Weise können beispielsweise Abschattungsanalysen entfallen.

Es können allgemein auch eine Mehrzahl von zweiten Transpondersignalen bereitgestellt werden, welche jeweils einem Luftfahrzeug einer Mehrzahl zweiter Luftfahrzeuge zugeordnet sind. Die Mehrzahl von zweiten Transpondersignalen kann in der Empfangsvorrichtung empfangen und an die Datenverarbeitungseinrichtung weitergeleitet werden. Des Weiteren können jeweilige zweite Signalstärkewerte für die zweiten Transpondersignale bereitgestellt werden. Es können eine Mehrzahl von zweiten Luftfahrzeugen als jeweils relevantes Luftfahrzeug oder irrelevantes Luftfahrzeug unter Verwendung / mittels eines jeweiligen Vergleichs mit dem Referenzwert bestimmt werden.

Das zweite Transpondersignal oder die zweiten Transpondersignale können frei von Positionsinformationen des (jeweiligen) Luftfahrzeugs sein.

Die ersten und/oder zweite(n) Signalstärkewerte und/oder normierten Signalstärkewerte und/oder der Referenzwert können beispielsweise jeweils RSSI-Werte (RSSI: *Received Signal Strength Indicator*) sein. Es können auch alternative Skalierungen der Signalstärkewerte vorgesehen sein.

Das Normieren der ersten Signalstärkewerte kann auf einen gemeinsamen Entfernungswert erfolgen. Mit anderen Worten kann das Verfahren aufweisen: ein Bestimmen von normierten Signalstärkewerten mittels jeweiligen Normierens der ersten Signalstärkewerte auf einen gemeinsamen Entfernungswert. Auf diese Weise können Signalstärkewerte, deren Ausstrahlquellen zum Luftfahrthindernis verschiedene Entfernungen aufweisen, miteinander vergleichbar gemacht werden.

Die jeweiligen Entfernungen (der ersten Luftfahrzeuge zum Luftfahrthindernis) können aus den (jeweiligen) Positionsinformationen bestimmt werden.

Der gemeinsame Entfernungswert kann einem vorbestimmten Sicherheitsabstand zum Luftfahrthindernis entsprechen. Der Sicherheitsabstand kann beispielsweise als verdoppelter Sicherheitsraumradius (um das Luftfahrthindernis) (vor-)bestimmt sein, insbesondere als Verdopplung eines Wirkungsbereichsradius um das Luftfahrhindernis plus eines Zusatzradius. Speziell kann der Sicherheitsabstand zwischen 4,0 km und 30,0 km, vorzugsweise zwischen 4,5 km und 20,0 km betragen, besonders vorzugsweise 10,4 km. Die Entfernungen und/oder die (Sicherheits-)Abstände können räumliche (dreidimensionale) Entfernungen/Abstände sein. Alternativ können die Entfernungen und/oder die Abstände zweidimensionale Abstände/Entfernungen, insbesondere horizontal projizierte Abstände/Entfernungen sein. Die Abstände und/oder Entfernungen können beispielsweise bezüglich eines Mittelpunkts oder einer äußeren Begrenzung des Luftfahrthindernisses definiert sein.

Das Normieren der ersten Signalstärkewerte kann mittels Friis-Übertragungsgleichung erfolgen. Mit anderen Worten kann das Verfahren folgenden Schritt aufweisen: ein Bestimmen von normierten Signalstärkewerten mittels jeweiligen Normierens der ersten Signalstärkewerte mittels der Friis-Übertragungsgleichung.

Konkret können die normierten Signalstärkewerte $\text{RSSI}_n$ mittels der Gleichung

$$\text{RSSI}_n = \text{RSSI}_1 + 20 \cdot \log\left(r_1/r_2\right)$$

bestimmt werden (mit Entfernung (zum Luftfahrthindernis) $r_1$, erstem Signalstärkewert $\text{RSSI}_1$ und Sicherheitsabstand $r_2$).

Das Normieren der ersten Signalstärkewerte kann auch mittels einer modifizierten Friis-Übertragungsgleichung erfolgen, in welcher beispielsweise weitere Dämpfungsparameter für elektromagnetische Wellen (wie Luftfeuchtigkeit) berücksichtigt sind.

Das Verfahren kann des Weiteren ein Glätten des zweiten Signalstärkewertes unter Berücksichtigung mindestens eines früheren zweiten Signalstärkewertes für mindestens ein früheres zweites Transpondersignal aufweisen. Außerdem kann das Verfahren ein Glätten der ersten Signalstärkewerte unter Berücksichtigung früherer erster Signalstärkewerte für frühere erste Transpondersignale aufweisen.

Die früheren ersten Signalstärkewerte können für frühere erste Transpondersignale bereitgestellt sein (zusammen mit den früheren ersten Transpondersignalen, welche vorzugsweise jeweils einem Luftfahrzeug der Mehrzahl erster Luftfahrzeuge zugeordnet sind und jeweils eine aktuelle Positionsinformation des Luftfahrzeugs aufweisen). Der mindestens eine frühere zweite Signalstärkewert kann für mindestens ein früheres zweites Transpondersignal bereitgestellt sein (zusammen mit dem mindestens einen früheren zweiten Transpondersignal, welches vorzugsweise einem zweiten Luftfahrzeug zugeordnet ist).

Das Glätten des zweiten Signalstärkewerts (und/oder der ersten Signalstärkewerte) kann mittels Bestimmung eines einfachen oder gewichteten gleitenden (arithmetischen) Mittelwerts erfolgen. Insbesondere kann der zweite Signalstärkewerte (und/oder die ersten Signalstärkewerte) durch einen einfachen oder gewichteten gleitenden Mittelwert (in welchem vorzugsweise der zweite Signalstärkewert verarbeitet sein kann) ersetzt werden.

Beispielsweise kann der zweite Signalstärkewert $\text{RSSI}_2$ mit einem Gewicht zwischen 0,01 und 0,3, vorzugsweise zwischen 0,1 und 0,3, besonders vorzugsweise 0,2, und der frühere zweite Signalstärkewert $\text{RSSI}_{2,alt}$ mit einem Gewicht zwischen 0,7 und 0,99, vorzugsweise zwischen 0,7 und 0,9, besonders vorzugsweise 0,8, gewichtet sein. Insbesondere kann der zweite Signalstärkewert $\text{RSSI}_2$ durch den gleitenden Mittelwert $(\text{RSSI}_2 + 4 \cdot \text{RSSI}_{2,alt})/5$ ersetzt werden.

Der Referenzwert kann dem niedrigsten normierten Signalstärkewert (dem normierten Signalstärkewert der niedrigsten Signalstärke) oder einem Mittelwert (insbesondere einem arithmetischen und/oder gewichteten Mittelwert) der mehreren niedrigsten der normierten Signalstärkewerte entsprechen. Beispielsweise kann der Referenzwert als Mittelwert der m niedrigsten der normierten Signalstärkewerte bestimmt werden, wobei $1 \le m \le 10$, bevorzugt $3 \le m \le 7$, besonders bevorzugt $m = 5$.

Das zweite Luftfahrzeug kann als relevantes Luftfahrzeug bestimmt werden, wenn der zweite Signalstärkewert mindestens so hoch wie der Referenzwert ist. Des Weiteren kann das zweite Luftfahrzeug als irrelevantes Luftfahrzeug bestimmt werden, wenn der zweite Signalstärkewert niedriger als der Referenzwert ist.

Alternativ kann das zweite Luftfahrzeug als relevantes Luftfahrzeug bestimmt werden, wenn der zweite Signalstärkewert höher als der Referenzwert ist, und/oder das zweite Luftfahrzeug als irrelevantes Luftfahrzeug bestimmt werden, wenn der zweite Signalstärkewert gleich oder niedriger als der Referenzwert ist. Weiter alternativ kann das zweite Luftfahrzeug als relevantes Luftfahrzeug bestimmt werden, wenn der zweite Signalstärkewert mindestens so hoch wie der Referenzwert abzüglich eines Sicherheitsabstands ist, und/oder das zweite Luftfahrzeug als irrelevantes Luftfahrzeug bestimmt werden, wenn der zweite Signalstärkewert niedriger als der Referenzwert abzüglich des Sicherheitsabstands ist.

Ergänzend kann das Bestimmen des zweiten Luftfahrzeugs als relevantes Luftfahrzeug oder das Bestimmen des zweiten Luftfahrzeugs als irrelevantes Luftfahrzeug unter zusätzlicher Verwendung eines Transpondercodes des zweiten Transpondersignals erfolgen. Somit kann das zweite Luftfahrzeug zusätzlich abhängig vom Transpondercode als relevant oder irrelevant bestimmt werden.

Das Verfahren kann aufweisen: Speichern von Informationen, die das zweite Luftfahrzeug als relevantes Luftfahrzeug oder irrelevantes Luftfahrzeug kennzeichnen, vorzugsweise in der Datenverarbeitungseinrichtung (in einer Datenbank und/oder Liste). Des Weiteren kann das Verfahren ein Löschen oder Ersetzen von Informationen, die das zweite Luftfahrzeug als relevantes Luftfahrzeug oder irrelevantes Luftfahrzeug kennzeichnen, aufweisen.

Das Verfahren kann aufweisen: Erzeugen des Ausgabesignals für die Kennzeichnungsvorrichtung zur Kennzeichnung des Luftfahrthindernisses in Abhängigkeit von Informationen, die die das zweite Luftfahrzeug als relevantes Luftfahrzeug oder irrelevantes Luftfahrzeug kennzeichnen.

Das Verfahren kann ferner aufweisen: ein Anpassen, vor dem Vergleich, des Referenzwerts oder des zweiten Signalstärkewerts in Abhängigkeit von einer Transponder-Betriebsart für das zweite Transpondersignal (der Transponder-Betriebsart eines Transponders des zweiten Luftfahrzeugs, mit welchem das zweite Transpondersignal erzeugt wurde).

Die ersten Transpondersignale können Transpondersignale einer ersten Gruppe von Transponder-Betriebsarten sein und das zweite Transpondersignal (die zweiten Transpondersignale) kann ein Transpondersignal einer zweiten Gruppe von Transponder-Betriebsarten sein, welche von der ersten Gruppe (zumindest teilweise) verschieden ist. Beispielsweise können die ersten Transpondersignale Mode-S-Transpondersignale aufweisen (oder sein) und/oder das zweite Transpondersignal ein Mode-A- oder Mode-C-Transpondersignal. Das zweite Transpondersignal kann auch ein Mode-S-Transpondersignal sein.

Das Anpassen kann mittels Addition oder Subtraktion eines Offset-Werts zum/vom Referenzwert oder zum/vom zweiten Signalstärkewert erfolgen, wobei der Offset-Wert vorzugsweise mittels Vergleichs von (Maxima von) Häufigkeitsverteilungen von Signalstärkewerten (von empfangenen Transpondersignalen) für verschiedene Transponder-Betriebsarten ermittelt wurde. Insbesondere kann der Offset-Wert mittels Differenzbildung der Maxima der Häufigkeitsverteilungen ermittelt werden.

Beispielsweise kann ein aus Mode-S-Transpondersignalen gebildeter Referenzwert zum Vergleich mit einem Mode-A- oder Mode-C-Transpondersignal als zweitem Transpondersignal um einen (positiven) Offset-Wert erhöht werden.

Die Häufigkeitsverteilungen können eine erste Häufigkeitsverteilung von Transpondersignalen mindestens einer ersten Transponder-Betriebsart (zum Beispiel Mode S) und eine zweite Häufigkeitsverteilung von Transpondersignalen mindestens einer zweiten Transponder-Betriebsart (zum Beispiel Mode A und/oder Mode C) aufweisen. Der Offset-Wert kann aus einer Differenz eines (ersten) Maximums der ersten Häufigkeitsverteilung und eines (zweiten) Maximums der zweiten Häufigkeitsverteilung bestimmt werden.

Die empfangenen Transpondersignale können die ersten und/oder zweiten Transpondersignale umfassen. Die empfangenen Transpondersignale können ergänzend oder alternativ weitere Transpondersignale umfassen.

Das Verfahren kann ferner ein (wiederholtes) Aktualisieren (Neu-Bestimmen) des Offset-Werts innerhalb eines (vordefinierten) Offset-Wert-Zeitintervalls aufweisen. Das Offset-Wert-Zeitintervall kann zwischen 0,1 Sekunden und einem Monat liegen. Mit anderen Worten kann der Offset-Wert alle 0,1 Sekunden oder einmal im Monat (oder in einem Zeitintervall dazwischen) aktualisiert werden.

Der Offset-Wert kann als gleitender Mittelwert aktualisiert werden. Beispielsweise können die Häufigkeitsverteilungen kontinuierlich aktualisiert und miteinander (hinsichtlich ihrer Maxima) verglichen werden.

Alternativ kann der Offset-Wert (zeitlich) fixiert sein.

Das Verfahren kann außerdem ein (wiederholtes) Aktualisieren (Neu-Bestimmen) des Referenzwerts innerhalb eines (vordefinierten) Referenzwert-Zeitintervalls aufweisen.

Das Referenzwert-Zeitintervall kann etwa zwischen einer 0,5 Sekunden und 3600 Sekunden, vorzugsweise zwischen 0,5 Sekunden und 30 Sekunden, besonders vorzugsweise zwischen 0,5 Sekunden und 5 Sekunden liegen. Mit anderen Worten kann der Referenzwert pro Zeitraum zwischen 0,5 Sekunden und 5 Sekunden einmal aktualisiert werden, beispielsweise einmal pro Sekunde.

Alternativ kann der Referenzwert aufgrund erfasster meteorologischer Änderungen (beispielsweise bei Überschreiten eines Schwellenwerts für eine meteorologische Größe) aktualisiert werden.

Der Referenzwert kann beispielsweise anhand weiterer erster Transpondersignale, weiterer erster Signalstärkewerte und weiterer normierter Signalstärkewerte aktualisiert werden, welche insbesondere bezüglich der ersten Transpondersignale, der ersten Signalstärkewerte und der normierten Signalstärkewerte zeitlich versetzt empfangen beziehungsweise bestimmt werden. Der Referenzwert kann als gleitender Mittelwert aktualisiert werden.

Das Ausgabesignal kann bei Nichtvorliegen von (Informationen zu) mindestens einem relevanten Luftfahrzeug erzeugt werden. Insbesondere kann das Ausgabesignal für die Dauer des Nichtvorliegens mindestens eines relevanten Luftfahrzeugs wiederholt erzeugt werden, beispielsweise mit einem Intervall einer Länge von 100 ms bis 500 ms, insbesondere alle 250 ms. Bei Vorliegen von (Informationen zu) mindestens einem relevanten Luftfahrzeug kann das Erzeugen des Ausgabesignals unterbrochen sein.

Es kann vorgesehen sein, dass die Kennzeichnung ausgeschaltet wird (und/oder ist), solange das Ausgabesignal (wiederholt) in der Kennzeichnungsvorrichtung empfangen wird. Die Kennzeichnung kann bei Abwesenheit eines in der Kennzeichnungsvorrichtung empfangenen Ausgabesignals eingeschaltet werden (und/oder sein), beispielsweise nach Ablauf eines vordefinierten Zeitintervalls.

Alternativ kann vorgesehen sein, dass die Kennzeichnung bei Vorliegen und/oder Empfang des Ausgabesignals in der Kennzeichnungsvorrichtung eingeschaltet und/oder bei Abwesenheit des Ausgabesignals in der Kennzeichnungsvorrichtung ausgeschaltet wird.

Die ersten und/oder zweiten Signalstärkewerte können in der Empfangsvorrichtung und/oder der Datenverarbeitungseinrichtung bestimmt werden. Wenn die ersten und/oder zweiten Signalstärkewerte in der Empfangsvorrichtung bestimmt werden, werden die ersten bzw. zweiten Signalstärkewerte an die Datenverarbeitungseinrichtung übermittelt.

In Verbindung mit dem System zur Kennzeichnung eines Luftfahrthindernisses können die vorangehend im Zusammenhang mit dem Verfahren beschriebene Ausgestaltungen entsprechend vorgesehen sein.

Im Zusammenhang mit der vorliegenden Offenbarung sind Parameterbereichsangaben ("zwischen", "von ... bis") als die Endpunkte umfassend zu verstehen.

Beschreibung von Ausführungsbeispielen

Im Folgenden werden weitere Ausführungsbeispiele unter Bezugnahme auf Figuren einer Zeichnung näher erläutert. Hierbei zeigen:

Fig. 1    eine schematische Darstellung eines Bereichs um ein Luftfahrhindernis;
Fig. 2    eine schematische Darstellung eines Systems zur Kennzeichnung eines Luftfahrthindernisses;
Fig. 3    eine schematische Darstellung eines computerimplementierten Verfahrens zur Kennzeichnung eines Luftfahrthindernisses;
Fig. 4    eine grafische Darstellung der Abhängigkeit von RSSI und Entfernung;
Fig. 5    eine grafische Darstellung der Häufigkeitsverteilung von Signalstärken für verschiedene Transponder-Betriebsarten; und
Fig. 6    eine schematische Darstellung eines Verfahrens zur Kennzeichnung eines Luftfahrthindernisses.

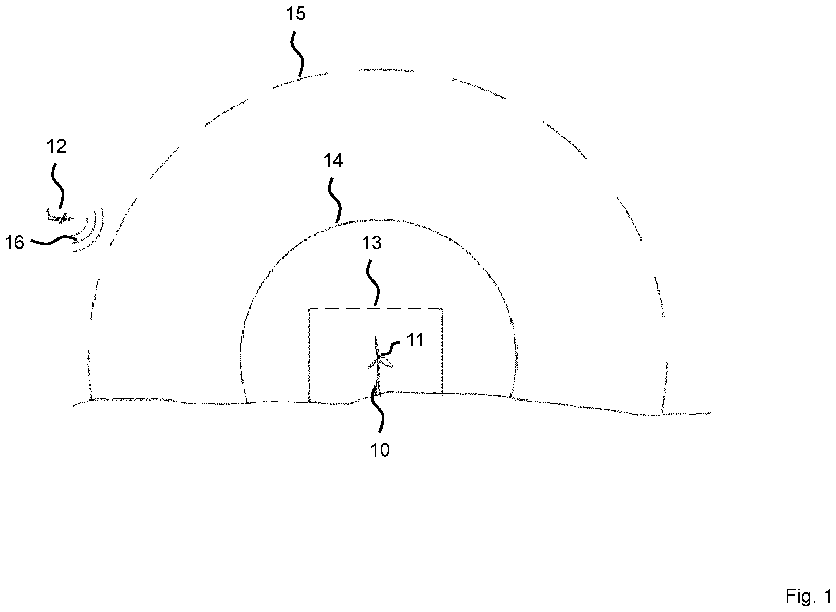

In Fig. 1 ist eine schematische Darstellung eines Bereichs um ein Luftfahrhindernis 10 gezeigt. Das Luftfahrthindernis 10 kann beispielsweise eine (einzelne) Windkraftanlage oder eine Mehrzahl von Windkraftkraftanlagen (insbesondere ein Windpark oder mehrere Windparks) sein. Grundsätzlich wirkt jedes Luftfahrthindernis 10 in den das Luftfahrthindernis 10 umgebenden Raum. Insbesondere können Luftströmungen beeinflusst werden. Ein Bereich um das Luftfahrthindernis 10, welcher in besonderem Maße der Wirkung des Luftfahrhindernisses ausgesetzt ist, kann im Allgemeinen als kugelförmig oder zylindrisch um das Luftfahrthindernis 10 gebildet sein (Wirkungsbereich 13). Beispielsweise kann der Wirkungsbereich, welcher um das Luftfahrthindernis 10 zentriert ist, einen (Zylinder-)Radius von 4 km und eine Gesamthöhe von 600 m zuzüglich der Höhe des Luftfahrthindernisses 10 aufweisen.

Um für Luftfahrzeuge 12 (beispielsweise Flugzeuge oder Hubschrauber) detektierbar und insbesondere sichtbar zu sein, wird das Luftfahrthindernis 10 mit einer geeigneten Kennzeichnung versehen. Hierzu ist eine Kennzeichnungsvorrichtung 11 in der Nähe des Luftfahrthindernisses 10 angeordnet, bei Windkraftanlagen beispielsweise an der Maschinengondel und/oder am Turm. Die Kennzeichnungsvorrichtung 11 kann eine Befeuerungsvorrichtung (Hindernisfeuer) sein. Beispielsweise kann die Kennzeichnung bzw. Befeuerung mittels LEDs erfolgen.

Die Kennzeichnung ist einzuschalten, wenn ein als relevant bestimmtes Luftfahrzeug 12 in einen zuvor definierten Raum, beispielsweise einen Erfassungsbereich 15, eindringt und sich insbesondere auf einen Sicherheitsbereich 14 um das Luftfahrthindernis 10 zubewegt.

Die Bestimmung des Luftfahrzeugs 12 als relevant erfolgt unter Verwendung von Transpondersignalen 16, welche vom Luftfahrzeug 12 (insbesondere einem Transponder des Luftfahrzeugs 12) ausgestrahlt werden. Die Transpondersignale 16 sind Funksignale. Generell haben Luftfahrzeuge 12 einen Transponder aufzuweisen. Der Transponder kann gemäß einer von verschiedenen Betriebsarten betrieben werden, insbesondere gemäß Mode A, Mode C oder Mode S. Der Transponder kann ein Class-1-Transponder oder ein Class-2-Transponder sein und insbesondere den minimum operational performance standards (MOPS) for secondary surveillance radar Mode S Transponders genügen, speziell im Falle eines Class-2-Transponders eine Spitzenausgangsleistung von +18.5 dBW (70W) an der Antenne aufweisen.

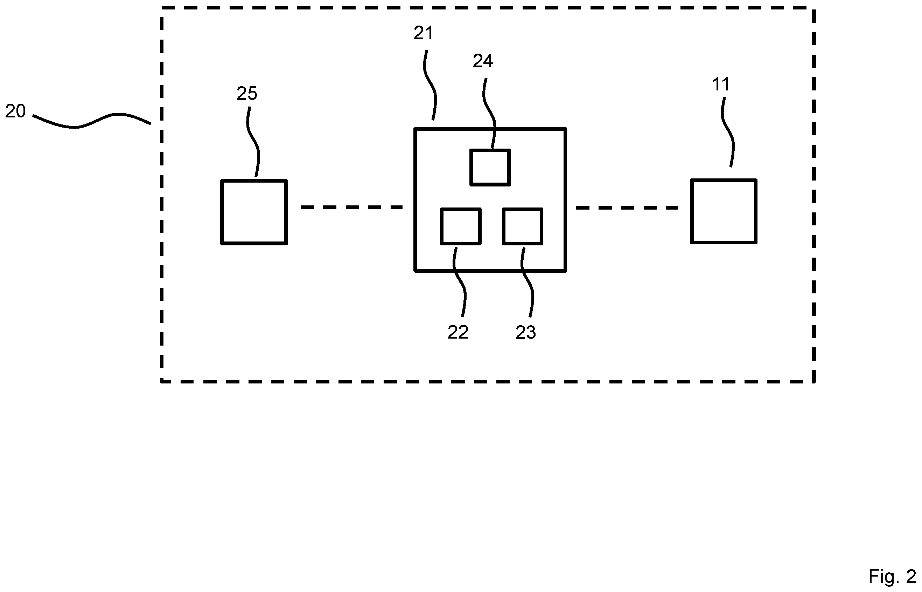

Die Transpondersignale 16 werden mittels einer Empfangsvorrichtung 25 empfangen, welche Teil eines Systems 20 zur Kennzeichnung eines Luftfahrthindernisses ist (vgl. Fig. 2). Die Empfangsvorrichtung 25 ist im Zentrum des Wirkraumes 13, beispielsweise am Luftfahrthindernis 10, angeordnet. Auf diese Weise besteht eine Übereinstimmung zwischen der Wirkung des Luftfahrthindernisses 10 und dem Empfang der Transpondersignale. Wenn somit kein Empfang von Transpondersignalen am Empfangsvorrichtung 25 erfolgt, besteht auch keine direkte Wirkung zwischen dem Luftfahrzeug 12 und dem Luftfahrthindernis 10. Folglich können aufwändige Abschattungsanalysen entfallen. Die Transpondersignale 16 können (Antwort-) Telegramme, beispielsweise in Reaktion auf ein initiales oder auf jeweils eines mehrerer Abfragesignale eines Sekundärradars sein. Die Transpondersignale 16 können auch unabhängig von Abfragesignalen erzeugt werden (bspw. im Squitter Modus / ADS-B).

Das System 20 weist außerdem neben der Kennzeichnungsvorrichtung 11 (sowie ggf. des Luftfahrthindernisses 10 selbst) eine Datenverarbeitungseinrichtung 21 mit einem Prozessor 22, einem Speicher 23 und einer Kommunikationsschnittstelle 24 (insbesondere zur Kommunikation mit der Empfangsvorrichtung 25 und der Kennzeichnungsvorrichtung 11) auf. Die Datenverarbeitungseinrichtung 21 ist mit der Empfangseinrichtung 25 und der Kennzeichnungseinrichtung kommunikativ verbunden. Die Datenverarbeitungseinrichtung 21 kann als (einzelner) Rechner, als verteiltes Rechensystem oder auch als Teil eines Rechners, insbesondere als Mikrocontroller oder integrierter Schaltkreis, speziell FPGA (Field Programmable Gate Array), gebildet sein.

Die Signalstärke der empfangenen Transpondersignale 16 werden zur Entfernungsbestimmung zum Luftfahrthindernis 10 verwendet. Hierbei ist eine entsprechende Kalibrierung unterschiedlicher Faktoren, die zu einer Signaldämpfung führen können, durchzuführen. Aufgrund unterschiedlicher Installationsbedingungen im Luftfahrthindernis 10 ist es vorteilhaft, die Kalibrierung dynamisch und kontinuierlich vorzunehmen.

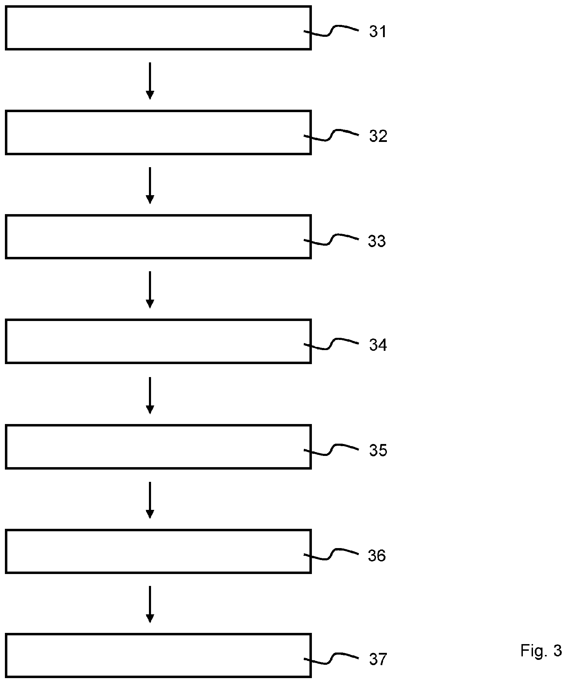

In Fig. 3 ist eine schematische Darstellung eines computerimplementierten Verfahrens zur Kennzeichnung eines Luftfahrthindernisses gezeigt.

In einem ersten Schritt 31 werden erste Transpondersignalen 16, welche jeweils einem ersten Luftfahrzeug 12 zugeordnet sind und jeweils eine aktuelle Positionsinformation des Luftfahrzeugs 12 aufweisen, in der Datenverarbeitungseinrichtung bereitgestellt. Zu den ersten Transpondersignalen werden außerdem jeweilige ersten Signalstärkewerte, insbesondere RSSI-Werte $RSSI_1$ bereitgestellt.

Aus den ersten Transpondersignalen 16 werden jeweilige Entfernungen $r_1$ der ersten Luftfahrzeuge 12 zum Luftfahrthindernis 10 bestimmt (mittels der jeweiligen aktuellen Positionsinformation) (Schritt 32).

Aus den ersten Signalstärkewerten $RSSI_1$ werden in einem dritten Schritt 33 normierte Signalstärkewerte $RSSI_n$ bestimmt, indem die ersten Signalstärkewerte $RSSI_1$ jeweils auf einen gemeinsamen Entfernungswert, den Sicherheitsabstand $r_2$ um das Lufthindernis 10, normiert werden. Die Normierung erfolgt mittels der Friis-Übertragungsgleichung:

$$RSSI_n = RSSI_1 + 20 \cdot \log\left(\frac{r_1}{r_2}\right).$$

Der Sicherheitsabstand $r_2$ ist ein vordefinierter Wert, mittels welchem ein Sicherheitsbereich um das Luftfahrthindernis 10 gebildet wird. Der Sicherheitsabstand $r_2$ kann für eine Windkraftanlage beispielsweise 10,4 km betragen.

In einem vierten Schritt 34 wird aus den normierten Signalstärkewerten $RSSI_n$ ein Referenzwert $RSSI_{ref}$ bestimmt. Dieser wird entweder dem niedrigsten der normierten Signalstärkewerte $RSSI_n$ gleichgesetzt oder als ein Mittelwert aus einer Mehrzahl von niedrigsten der normierten Signalstärkewerte $RSSI_n$, beispielsweise dem Mittelwert der fünf niedrigsten normierten Signalstärkewerte $RSSI_n$, bestimmt.

Die Bestimmung des Referenzwert $RSSI_{ref}$ wird durch folgendes Beispiel veranschaulicht. Es werden erste Transpondersignale 16 von sechs Luftfahrzeugen (LFZ) 12, bezeichnet mit Nummern 1, 2, 6, 7, 11 und 13 (Tabelle 1, Spalte 1), empfangen. Die aus den Positionsinformationen bestimmten Entfernung sind in der folgenden Tabelle 1, Spalte 2 und die entsprechenden ersten Signalstärkewerten $RSSI_1$ in Tabelle 1, Spalte 3 dargestellt.

Tabelle 1:

| LFZ | Entfernung $r_1$ | $RSSI_1$ |
| --- | --- | --- |
| 1 | 82 475 m | 97 |
| 2 | 86 101 m | 109 |
| 6 | 121 641 m | 99 |
| 7 | 127 023 m | 96 |
| 11 | 188 735 m | 97 |
| 13 | 215 989 m | 107 |

Mittels der Friis-Übertragungsgleichung bestimmte normierte Signalstärkewerte $RSSI_n$ sind in der folgenden Tabelle 2 dargestellt. Zusätzlich zur für den Referenzwert maßgeblichen Entfernung von 10,4 km (hervorgehoben), welche dem vorbestimmten Sicherheitsabstand entspricht, sind weitere Entfernungen beispielhaft aufgeführt.

Tabelle 2:

| $r_2$ | LFZ1 | LFZ2 | LFZ6 | LFZ7 | LFZ11 | LFZ13 |
| --- | --- | --- | --- | --- | --- | --- |
| 1 | 155.33 | 167.70 | 160.70 | 158.08 | 162.52 | 173.69 |
| 2 | 149.31 | 161.68 | 154.68 | 152.06 | 156.50 | 167.67 |
| 3 | 145.78 | 158.16 | 151.16 | 148.54 | 152.97 | 164.15 |

(fortgesetzt)

| $r_2$ | LFZ1 | LFZ2 | LFZ6 | LFZ7 | LFZ11 | LFZ13 |
|---|---|---|---|---|---|---|
| 4 | 143.29 | 155.66 | 148.66 | 146.04 | 150.48 | 161.65 |
| 5 | 141.35 | 153.72 | 146.72 | 144.10 | 148.54 | 159.71 |
| 6 | 139.76 | 152.14 | 145.14 | 142.51 | 146.95 | 158.13 |
| 7 | 138.42 | 150.80 | 143.80 | 141.18 | 145.62 | 156.79 |
| 8 | 137.26 | 149.64 | 142.64 | 140.02 | 144.46 | 155.63 |
| 9 | 136.24 | 148.62 | 141.62 | 138.99 | 143.43 | 154.60 |
| 10 | 135.33 | 147.70 | 140.70 | 138.08 | 142.52 | 153.69 |
| **10,4** | **134.99** | **147.36** | **140.36** | **137.74** | **142.18** | **153.35** |
| 20 | 129.31 | 141.68 | 134.68 | 132.06 | 136.50 | 147.67 |
| 30 | 125.78 | 138.16 | 131.16 | 128.54 | 132.97 | 144.15 |
| 40 | 123.29 | 135.66 | 128.66 | 126.04 | 130.48 | 141.65 |
| 50 | 121.35 | 133.72 | 126.72 | 124.10 | 128.54 | 139.71 |
| 60 | 119.76 | 132.14 | 125.14 | 122.51 | 126.95 | 138.13 |
| 70 | 118.42 | 130.80 | 123.80 | 121.18 | 125.62 | 136.79 |
| 80 | 117.26 | 129.64 | 122.64 | 120.02 | 124.46 | 135.63 |
| 90 | 116.24 | 128.62 | 121.62 | 118.99 | 123.43 | 134.60 |
| 100 | 115.33 | 127.70 | 120.70 | 118.08 | 122.52 | 133.69 |
| 110 | 114.50 | 126.87 | 119.87 | 117.25 | 121.69 | 132.86 |
| 120 | 113.74 | 126.12 | 119.12 | 116.49 | 120.93 | 132.11 |

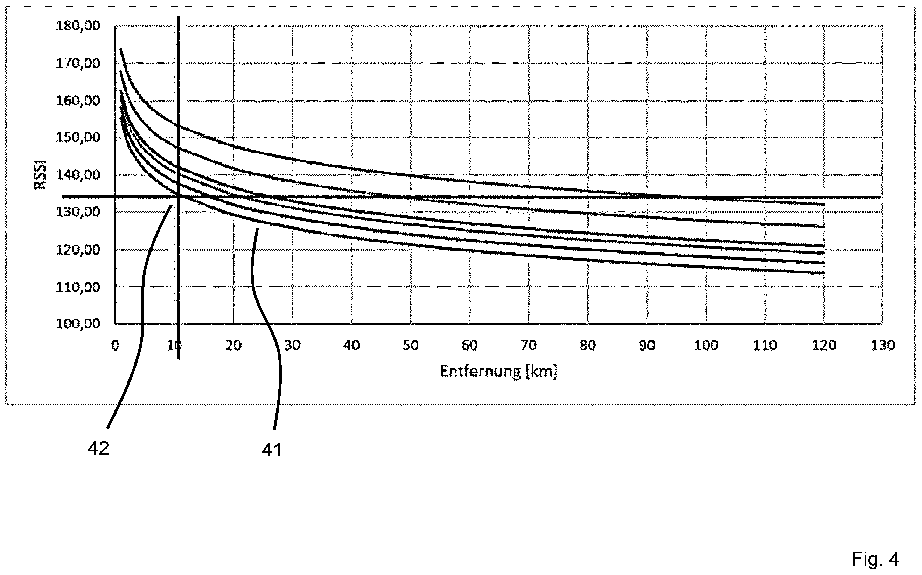

In Fig. 4 ist ein entsprechender Plot zu den Werten gemäß Tabelle 2 abgebildet. Jede Kurve ist einem Luftfahrzeug zugeordnet, Kurve 41 beispielsweise LFZ1. Der Schnittpunkt 42 weist den Sicherheitsabstand $r_2$ als Abszissenwert und den Referenzwert $RSSI_{ref}$ als Ordinatenwert auf.

Tabelle 2 und Fig. 4 veranschaulichen, dass das LFZ1 in ca. 82 km Entfernung mit einem ersten Signalstärkewert von 97 den geringsten normierten Signalstärkewert aufweist und somit als Referenzwert festzulegen ist. Beim Sicherheitsabstand (hier 10,4 km) bedeutet dies einen Referenzwert $RSSI_{ref}$ von 134,99. Umgekehrt würde beispielsweise das LFZ13, wenn keine Positionsinformationen mit dem Transpondersignal 16 übermittelt worden wären, bereits bei einer Entfernung zwischen 80 km und 90 km als relevant eingestuft werden.

In einem fünften Schritt 35 wird ein zweites Transpondersignal 16 (samt eines zweiten Signalstärkewerts $RSSI_2$ für das zweite Transpondersignal 16) in der Datenverarbeitungseinrichtung 21 bereitgestellt, welches einem zweiten Luftfahrzeug 12 (beispielsweise einem Leichtflugzeug oder Kleinflugzeug) zugeordnet ist. Das zweite Luftfahrzeug 12 wird anschließend als relevantes Luftfahrzeug oder als irrelevantes Luftfahrzeug bestimmt, indem der zweite Signalstärkewert mit dem Referenzwert verglichen wird (sechster Schritt 36).

Insbesondere wenn der zweite Signalstärkewert mindestens so hoch wie der Referenzwert ist ($RSSI_2 \geq RSSI_{ref}$), kann das zweite Luftfahrzeug 12 als relevant bestimmt werden, andernfalls ($RSSI_2 < RSSI_{ref}$) als irrelevant.

Entsprechende Informationen, die ein Luftfahrzeug als relevant oder irrelevant kennzeichnen, werden in einer Datenbank (in der Datenverarbeitungseinrichtung 21) gespeichert.

Ergänzend kann der Referenzwert (oder alternativ der zweite Signalstärkewert) vor dem Vergleich abhängig von der Transponder-Betriebsart des Transponders des zweiten Luftfahrzeugs 12 angepasst werden, etwa durch Addition eines Offset-Werts. Beispielsweise weisen Mode-A-Transpondersignale oder Mode-C-Transpondersignale aufgrund ihrer gegenüber Mode-S-Transpondersignalen kürzeren Telegrammlänge (Länge des Transpondersignals) und verschiedene Signalcharakteristik einen höheren Signal-Rausch-Abstand und somit einen durchschnittlich abweichenden RSSI-Wert auf. Für Mode-A-Transpondersignale und Mode-C-Transpondersignale kann somit ein mittels Offset-Wert-Addition angepasster Referenzwert verwendet werden. Zur Bestimmung des Offsets werden Häufigkeitsverteilungen der Signalstärkewerte von Mode-A-Transpondersignalen und Mode-C-Transpondersignalen sowie von Mode-S-Transpondersignalen miteinander verglichen.

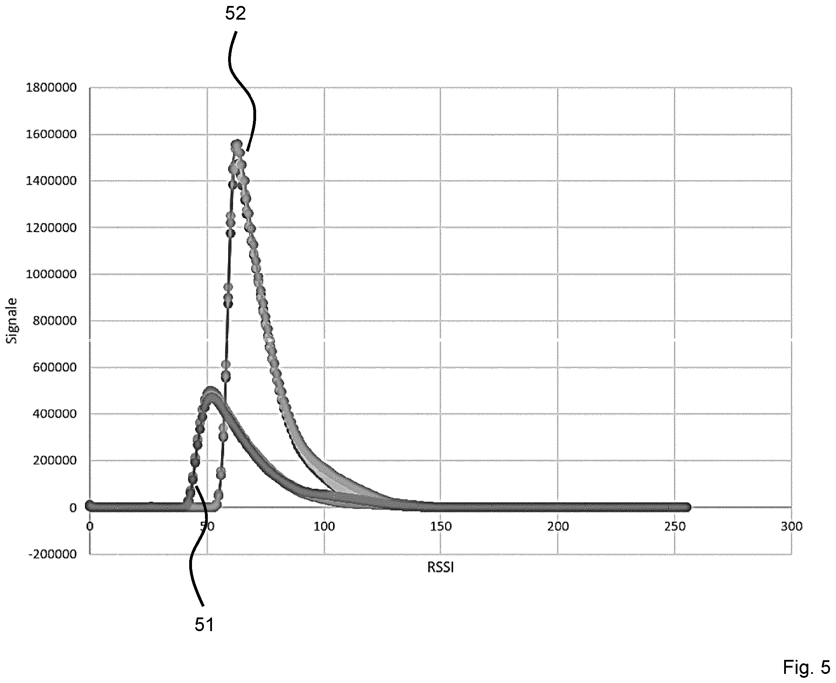

In Fig. 5 sind entsprechende Häufigkeitsverteilungen illustriert. Die Kurven 51 stellen Häufigkeitsverteilungen von RSSI-Werten für Mode-S-Transpondersignale für drei verschiedene Tage dar. Die Kurven 52 stellen Häufigkeitsverteilungen von RSSI-Werten für Mode-A- und Mode-C-Transpondersignale für dieselben drei Tage dar. Während für Mode A und Mode C die meisten Transpondersignale einen RSSI-Wert um 62 bis 63 haben, ist für das Maximum für Mode-S-Transpondersignale bei RSSI-Werten je nach Tag bei 51 oder 52. Dies ergibt einen Offset-Wert zwischen 10 und 12.

Folglich wäre ein aus Mode-S-Transpondersignalen bestimmter Referenzwert, wenn das zweite Transpondersignal 16 ein Mode-A- oder Mode-C-Transpondersignal ist, um einen Offset-Wert zwischen 10 und 12 zu erhöhen, bevor der zweite Signalstärkewert mit dem Referenzwert verglichen wird.

Ergänzend können die ersten und/oder zweiten Signalstärkewerte (bzw. der zweite Signalstärkewert) geglättet werden. Hierbei werden frühere (früher bereitgestellte) erste bzw. zweite Signalstärkewerte berücksichtigt. Beispielsweise kann der zweite Signalstärkewert $RSSI_2$ als gleitender Mittelwert geglättet werden. Insbesondere kann bei der Mittelwertbildung der frühere zweite Signalstärkewert $RSSI_{2,alt}$ ein Gewicht von 4/5 und der (aktuelle) zweite Signalstärkewert $RSSI_2$ ein Gewicht von 1/5 erhalten, das heißt: Der zweite Signalstärkewert $RSSI_2$ wird ersetzt durch den gleitenden Mittelwert

$$\frac{(RSSI_2 + 4 \cdot RSSI_{2,alt})}{5}.$$

In einem siebten Schritt wird ein Ausgabesignal für die Kennzeichnungsvorrichtung 11 zur Kennzeichnung des Luftfahrthindernisses 10 in Abhängigkeit vom Vorliegen oder Nichtvorliegen mindestens eines relevanten Luftfahrzeugs (beispielsweise in Abhängigkeit vom Vorliegen oder Nichtvorliegen eines Datenbankeintrags zu einem relevanten Luftfahrzeug) erzeugt und an die Kennzeichnungsvorrichtung 11 zur Schaltung der Kennzeichnung / des Hindernisfeuers übermittelt.

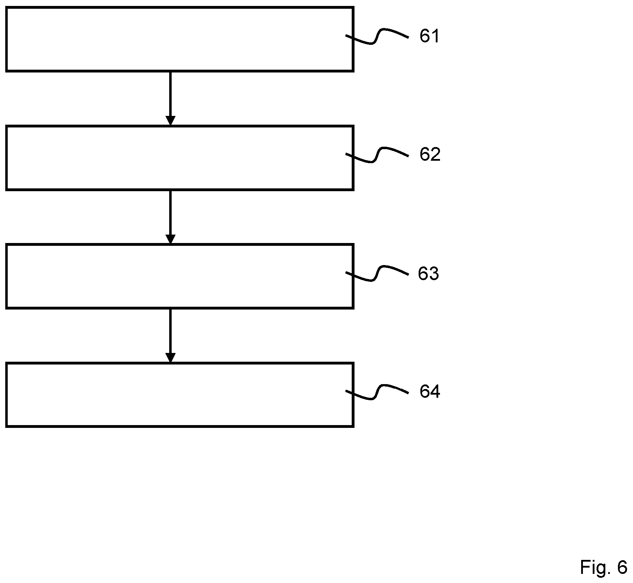

Fig. 6 eine schematische Darstellung eines Verfahrens zur Kennzeichnung eines Luftfahrthindernisses, welches im System 20 mit der Empfangsvorrichtung 25, der Datenverarbeitungseinrichtung 21 und der Kennzeichnungsvorrichtung 11 ausgeführt wird.

Zunächst werden die ersten Transpondersignalen 16 und (ggf. zeitversetzt) das zweite Transpondersignal 16 in der Empfangsvorrichtung 25 empfangen, an die Datenverarbeitungseinrichtung 21 übermittelt und somit in der Datenverarbeitungseinrichtung 21 bereitgestellt (Schritt 61). Gemäß Schritt 62 wird mittels der bereitgestellten Signale das vorstehende (computerimplementierte) Verfahren in der Datenverarbeitungseinrichtung 21 durchgeführt und dabei das Ausgabesignal erzeugt. Dieses wird an die Kennzeichnungsvorrichtung 11 übermittelt (Schritt 63). In Abhängigkeit vom (in der Kennzeichnungsvorrichtung 11 empfangenen) Ausgabesignal wird die Kennzeichnung des Luftfahrthindernisses 10 mittels der Kennzeichnungsvorrichtung 11 geschaltet (Schritt 64).

Insbesondere wird das Ausgabesignal für die Dauer des Nichtvorliegens mindestens eines relevanten Luftfahrzeugs wiederholt erzeugt und übermittelt. Die Kennzeichnung wird/verbleibt nur ausgeschaltet, wenn das Ausgabesignal regelmäßig in der Kennzeichnungsvorrichtung 11 empfangen wird. Dadurch ist gewährleistet, dass die Befeuerung auch im Fehlerfall aktiviert ist.

Die in der vorstehenden Beschreibung, den Ansprüchen sowie den Zeichnungen offenbarten Merkmale können sowohl einzeln als auch in beliebiger Kombination für die Verwirklichung der verschiedenen Ausführungen von Bedeutung sein.

Bezugszeichenliste

| | |
|---|---|
| 10 | Luftfahrthindernis |
| 11 | Kennzeichnungsvorrichtung |
| 12 | erstes/zweites Luftfahrzeug |
| 13 | Wirkungsbereich |
| 14 | Sicherheitsbereich |
| 15 | Erfassungsbereich |
| 16 | erstes/zweites Transpondersignal |
| 20 | System |
| 21 | Datenverarbeitungseinrichtung |
| 22 | Prozessor |
| 23 | Speicher |
| 24 | Kommunikationsschnittstelle |
| 25 | Empfangsvorrichtung |
| 31-37 | Schritte |
| 41 | Kurve |
| 42 | Schnittpunkt |
| 51, 52 | Kurven |
| 61-64 | Schritte |

**Patentansprüche**

1.  Computerimplementiertes Verfahren zur Kennzeichnung eines Luftfahrthindernisses (10) mit folgenden Schritten:

    - Bereitstellen von ersten Transpondersignalen (16), welche jeweils einem Luftfahrzeug (12) einer Mehrzahl erster Luftfahrzeuge (12) zugeordnet sind und jeweils eine aktuelle Positionsinformation des Luftfahrzeugs (12) aufweisen, und Bereitstellen von jeweiligen ersten Signalstärkewerten für die ersten Transpondersignale (16); und
    - Bestimmen, aus den ersten Transpondersignalen (16), von jeweiligen Entfernungen der ersten Luftfahrzeuge (12) zu einem Luftfahrthindernis (10);

    **gekennzeichnet durch** folgende Schritte:

    - Bestimmen von normierten Signalstärkewerten mittels jeweiligen Normierens der ersten Signalstärkewerte;
    - Bestimmen eines Referenzwerts aus einem niedrigsten oder mehreren niedrigsten der normierten Signalstärkewerte;
    - Bereitstellen eines zweiten Transpondersignals (16), welches einem zweiten Luftfahrzeug (12) zugeordnet ist, und eines zweiten Signalstärkewerts für das zweite Transpondersignal (16);
    - Bestimmen des zweiten Luftfahrzeugs (12) als relevantes Luftfahrzeug oder Bestimmen des zweiten Luftfahrzeugs (12) als irrelevantes Luftfahrzeug unter Verwendung eines Vergleichs des zweiten Signalstärkewerts mit dem Referenzwert; und
    - Erzeugen eines Ausgabesignals für eine Kennzeichnungsvorrichtung (11) zur Kennzeichnung des Luftfahrthindernisses (10) in Abhängigkeit vom Vorliegen oder in Abhängigkeit vom Nichtvorliegen mindestens eines relevanten Luftfahrzeugs.

2.  Verfahren nach Anspruch 1, wobei das Normieren der ersten Signalstärkewerte auf einen gemeinsamen Entfernungswert erfolgt.

3.  Verfahren nach Anspruch 2, wobei der gemeinsame Entfernungswert einem vorbestimmten Sicherheitsabstand zum Luftfahrthindernis (10) entspricht.

4.  Verfahren nach mindestens einem der vorstehenden Ansprüche, wobei das Normieren der ersten Signalstärkewerte mittels Friis-Übertragungsgleichung erfolgt.

5.  Verfahren nach mindestens einem der vorstehenden Ansprüche, des Weiteren aufweisend:

    - Glätten des zweiten Signalstärkewertes unter Berücksichtigung mindestens eines früheren zweiten Signalstärkewertes für mindestens ein früheres zweites Transpondersignal.

6.  Verfahren nach Anspruch 5, wobei das Glätten des zweiten Signalstärkewerts mittels Bestimmung eines einfachen oder gewichteten gleitenden Mittelwerts erfolgt.

7.  Verfahren nach mindestens einem der vorstehenden Ansprüche, wobei der Referenzwert dem niedrigsten normierten Signalstärkewert oder einem Mittelwert der mehreren niedrigsten der normierten Signalstärkewerte entspricht.

8.  Verfahren nach mindestens einem der vorstehenden Ansprüche, wobei das zweite Luftfahrzeug (12) als relevantes Luftfahrzeug bestimmt wird, wenn der zweite Signalstärkewert mindestens so hoch wie der Referenzwert ist.

9.  Verfahren nach mindestens einem der vorstehenden Ansprüche, ferner aufweisend:

    - Anpassen, vor dem Vergleich, des Referenzwerts oder des zweiten Signalstärkewerts in Abhängigkeit von einer Transponder-Betriebsart für das zweite Transpondersignal (16).

10. Verfahren nach Anspruch 9, wobei das Anpassen mittels Addition oder Subtraktion eines Offset-Werts zum/vom Referenzwert oder zum/vom zweiten Signalstärkewert erfolgt, wobei der Offset-Wert mittels Vergleichs von Häufigkeitsverteilungen von Signalstärkewerten für verschiedene Transponder-Betriebsarten ermittelt wurde.

11. Verfahren nach Anspruch 10, ferner aufweisend:

- Aktualisieren des Offset-Werts innerhalb eines Offset-Wert-Zeitintervalls.

12. Verfahren nach mindestens einem der vorstehenden Ansprüche, ferner aufweisend:

- Aktualisieren des Referenzwerts innerhalb eines Referenzwert-Zeitintervalls.

13. Verfahren zur Kennzeichnung eines Luftfahrthindernisses (10), ausgeführt in einem System (20) mit einer Empfangsvorrichtung, einer Datenverarbeitungseinrichtung (21) und einer Kennzeichnungsvorrichtung (11), und folgende Schritte aufweisend:

- Empfangen von ersten Transpondersignalen (16) und einem zweiten Transpondersignal (16) in der Empfangsvorrichtung (25);
- Übermitteln der ersten Transpondersignale (16) und des zweiten Transpondersignals (16) an die Datenverarbeitungseinrichtung (21);
- Durchführen des Verfahrens nach mindestens einem der vorstehenden Ansprüche in der Datenverarbeitungseinrichtung (21);
- Übermitteln eines Ausgabesignals von der Datenverarbeitungseinrichtung (21) an die Kennzeichnungsvorrichtung (11); und
- Schalten einer Kennzeichnung des Luftfahrthindernisses (10) mittels der Kennzeichnungsvorrichtung (11) in Abhängigkeit vom Ausgabesignal.

14. Datenverarbeitungseinrichtung (21), aufweisend mindestens einen Prozessor (22), der eingerichtet ist, das Verfahren nach mindestens einem der Ansprüche 1 bis 12 auszuführen.

15. System (20) zur Kennzeichnung eines Luftfahrthindernisses (10), aufweisend eine Empfangseinrichtung (25), eine Datenverarbeitungseinrichtung (21) und eine Kennzeichnungsvorrichtung (11), wobei

- die Empfangsvorrichtung (25) eingerichtet ist, erste Transpondersignalen (16) und ein zweites Transpondersignal (16) zu empfangen und an die Datenverarbeitungseinrichtung (21) zu übermitteln;
- die Datenverarbeitungseinrichtung (21) eingerichtet ist, das Verfahren nach mindestens einem der Ansprüche 1 bis 12 auszuführen und ein Ausgabesignal an die Kennzeichnungsvorrichtung (11) zu übermitteln; und
- die Kennzeichnungsvorrichtung (11) eingerichtet ist, eine Kennzeichnung des Luftfahrthindernisses (10) in Abhängigkeit vom Ausgabesignal zu schalten.

**Claims**

1. Computer-implemented method for marking an air traffic obstacle (10), comprising the following steps:

- providing first transponder signals (16), which are each assigned to an aircraft (12) of a plurality of first aircrafts (12) and each comprise current position information of the aircraft (12), and providing respective first signal strength values for the first transponder signals (16); and
- determining, from the first transponder signals (16), respective distances of the first aircrafts (12) from an air traffic obstacle (10);

**characterized by** the following steps:

- determining normalized signal strength values by means of respective normalization of the first signal strength values;
- determining a reference value from a lowest or a plurality of lowest of the normalized signal strength values;
- providing a second transponder signal (16), which is assigned to a second aircraft (12), and a second signal strength value for the second transponder signal (16);
- determining the second aircraft (12) as a relevant aircraft or determining the second aircraft (12) as an irrelevant aircraft using a comparison of the second signal strength value with the reference value; and
- generating an output signal for a marking device (11) for marking the air traffic obstacle (10) depending on the presence or depending on the absence of at least one relevant aircraft.

2. Method according to Claim 1, wherein the normalization of the first signal strength values is carried out with respect to a common distance value.

3. Method according to Claim 2, wherein the common distance value corresponds to a predetermined safety distance from the air traffic obstacle (10).

4. Method according to at least one of the preceding claims, wherein the normalization of the first signal strength values is carried out by means of a Friis transmission equation.

5. Method according to at least one of the preceding claims, furthermore comprising:

    - smoothing of the second signal strength value taking into account at least one earlier second signal strength value for at least one earlier second transponder signal.

6. Method according to Claim 5, wherein the smoothing of the second signal strength value is carried out by means of determining a simple or weighted moving average value.

7. Method according to at least one of the preceding claims, wherein the reference value corresponds to the lowest normalized signal strength value or to an average value of the plurality of lowest of the normalized signal strength values.

8. Method according to at least one of the preceding claims, wherein the second aircraft (12) is determined as a relevant aircraft if the second signal strength value is at least as high as the reference value.

9. Method according to at least one of the preceding claims, furthermore comprising:

    - adapting, before the comparison, the reference value or the second signal strength value depending on a transponder operating mode for the second transponder signal (16).

10. Method according to Claim 9, wherein the adapting is carried out by means of adding or subtracting an offset value to/from the reference value or to/from the second signal strength value, wherein the offset value has been determined by means of comparing frequency distributions of signal strength values for different transponder operating modes.

11. Method according to Claim 10, furthermore comprising:

    - updating the offset value within an offset value time interval.

12. Method according to at least one of the preceding claims, furthermore comprising:

    - updating the reference value within a reference value time interval.

13. Method for marking an air traffic obstacle (10), carried out in a system (20) having a receiving device, a data processing device (21) and a marking device (11), and comprising the following steps:

    - receiving first transponder signals (16) and a second transponder signal (16) in the receiving device (25);
    - transmitting the first transponder signals (16) and the second transponder signal (16) to the data processing device (21);
    - carrying out the method according to at least one of the preceding claims in the data processing device (21);
    - transmitting an output signal from the data processing device (21) to the identification device (11); and
    - switching a marking of the air traffic obstacle (10) by means of the marking device (11) depending on the output signal.

14. Data processing device (21), comprising at least one processor (22) which is set up to carry out the method according to at least one of Claims 1 to 12.

15. System (20) for marking an air traffic obstacle (10), comprising a receiving device (25), a data processing device (21) and a marking device (11), wherein

    - the receiving device (25) is configured to receive first transponder signals (16) and a second transponder signal (16) and to transmit them to the data processing device (21);
- the data processing device (21) is configured to carry out the method according to at least one of Claims 1 to 12 and to transmit an output signal to the marking device (11); and
- the marking device (11) is configured to switch a marking of the air traffic obstacle (10) depending on the output signal.

**Revendications**

1. Procédé mis en œuvre par ordinateur permettant de marquer un obstacle à la navigation aérienne (10) avec les étapes suivantes :

    - préparation de premiers signaux de transpondeur (16), lesquels sont respectivement attribués à un aéronef (12) d'une pluralité de premiers aéronefs (12) et comportent respectivement une information de position actuelle de l'aéronef (12) et préparation de premières valeurs d'intensité de signal respectives pour les premiers signaux de transpondeur (16) ; et
    - détermination, à partir des premiers signaux de transpondeur (16), des distances respectives des premiers aéronefs (12) par rapport à un obstacle à la navigation aérienne (10) ;

    **caractérisé par** les étapes suivantes :

    - détermination des valeurs d'intensité de signal normalisées au moyen de la normalisation respective des premières valeurs d'intensité de signal ;
    - détermination d'une valeur de référence à partir d'une valeur la plus basse ou de plusieurs valeurs les plus basses des valeurs d'intensité de signal normalisées ;
    - préparation d'un deuxième signal de transpondeur (16), lequel est attribué à un deuxième aéronef (12) et d'une deuxième valeur d'intensité de signal pour le deuxième signal de transpondeur (16) ;
    - détermination du deuxième aéronef (12) en tant qu'aéronef important ou détermination du deuxième aéronef (12) en tant qu'aéronef sans importance en utilisant une comparaison de la deuxième valeur d'intensité de signal avec la valeur de référence ; et
    - production d'un signal de sortie pour un dispositif de marquage (11) pour marquage de l'obstacle à la navigation aérienne (10) en fonction de la présence ou en fonction de la non présence d'au moins un aéronef important.

2. Procédé selon la revendication 1, sachant que la normalisation des premières valeurs d'intensité de signal a lieu sur une valeur de distance commune.

3. Procédé selon la revendication 2, sachant que la valeur de distance commune correspond à une distance de sécurité prédéterminée par rapport à l'obstacle à la navigation aérienne (10).

4. Procédé selon au moins l'une quelconque des revendications précédentes, sachant que la normalisation des premières valeurs d'intensité de signal a lieu au moyen de l'équation de transmission de Friis.

5. Procédé selon au moins l'une quelconque des revendications précédentes, comportant en plus :

    - le lissage de la deuxième valeur d'intensité de signal en tenant compte au moins d'une deuxième valeur d'intensité de signal antérieure pour au moins un deuxième signal de transpondeur antérieur.

6. Procédé selon la revendication 5, sachant que le lissage de la deuxième valeur d'intensité de signal a lieu au moyen de la détermination d'une valeur moyenne simple ou mobile pondérée.

7. Procédé selon au moins l'une quelconque des revendications précédentes, sachant que la valeur de référence correspond à la valeur d'intensité de signal normalisée la plus basse ou à une valeur moyenne de plusieurs valeurs d'intensité de signal normalisées les plus basses.

8. Procédé selon au moins l'une quelconque des revendications précédentes, sachant que le deuxième aéronef (12) est déterminé en tant qu'aéronef important, si la deuxième valeur d'intensité de signal est au moins aussi élevée que la valeur de référence.

9. Procédé selon au moins l'une quelconque des revendications précédentes, comportant en plus :

- l'adaptation, avant la comparaison, de la valeur de référence ou de la deuxième valeur d'intensité de signal en fonction d'un type de fonctionnement de transpondeur pour le deuxième signal de transpondeur (16).

10. Procédé selon la revendication 9, sachant que l'adaptation a lieu au moyen de l'addition ou de la soustraction d'une valeur de décalage à la/de la valeur de référence ou à la/de la deuxième valeur d'intensité de signal, sachant que la valeur de décalage a été déterminée par comparaison des répartitions de fréquence des valeurs d'intensité de signal pour différents types de fonctionnement de transpondeur.

11. Procédé selon la revendication 10, comportant en plus :

- l'actualisation de la valeur de décalage à l'intérieur d'un intervalle de temps de valeur de décalage.

12. Procédé selon au moins l'une quelconque des revendications précédentes, comportant en plus :

- l'actualisation de la valeur de référence à l'intérieur d'un intervalle de temps de valeur de référence.

13. Procédé permettant de marquer un obstacle à la navigation aérienne (10) réalisé dans un système (20) avec un dispositif de réception, un système de traitement des données (21) et un dispositif de marquage (11) et comportant les étapes suivantes :

- réception de premiers signaux de transpondeur (16) et d'un deuxième signal de transpondeur (16) dans le dispositif de réception (25) ;
- transmission des premiers signaux de transpondeur (16) et d'un deuxième signal de transpondeur (16) au système de traitement des données (21) ;
- exécution du procédé selon au moins l'une quelconque des revendications précédentes dans le système de traitement des données (21) ;
- transmission d'un signal de sortie du système de traitement des données (21) au dispositif de marquage (11) ; et
- lancement d'un marquage de l'obstacle à la navigation aérienne (10) au moyen du dispositif de marquage (11) en fonction du signal de sortie.

14. Système de traitement des données (21) comportant au moins un processeur (22), qui est agencé pour exécuter le procédé selon au moins l'une quelconque des revendications 1 à 12.

15. Système (20) de marquage d'un obstacle à la navigation aérienne (10), comportant un dispositif de réception (25), un système de traitement des données (21) et un dispositif de marquage (11), sachant que

- le dispositif de réception (25) est agencé pour recevoir des premiers signaux de transpondeur (16) et un deuxième signal de transpondeur (16) et transmettre au système de traitement des données (21) ;
- le système de traitement des données (21) est agencé pour exécuter le procédé selon au moins l'une quelconque des revendications 1 à 12 et transmettre un signal de sortie au dispositif de marquage (11) ; et
- le dispositif de marquage (11) est agencé pour lancer un marquage de l'obstacle à la navigation aérienne (10) en fonction du signal de sortie.

Fig. 1

Fig. 2

31   32   33   34   35   36   37

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3926166 A1
- WO 2006092137 A
- EP 3693946 B1
- DE 202005019193 U1